(19) Europäisches Patentamt / European Patent Office / Office européen des brevets

(11) **EP 4 742 288 A1**

(12) **EUROPEAN PATENT APPLICATION**
published in accordance with Art. 153(4) EPC

(43) Date of publication:
**13.05.2026 Bulletin 2026/20**

(21) Application number: **24835796.4**

(22) Date of filing: **16.05.2024**

(51) International Patent Classification (IPC):
$H01G\ 11/56\ ^{(2013.01)}$  $H01G\ 4/16\ ^{(2006.01)}$
$H01G\ 9/028\ ^{(2006.01)}$  $H10D\ 84/03\ ^{(2025.01)}$
$H10D\ 84/00\ ^{(2025.01)}$

(52) Cooperative Patent Classification (CPC):
**H01G 4/16; H01G 9/028; H01G 11/56**

(86) International application number:
**PCT/JP2024/018185**

(87) International publication number:
**WO 2025/009274 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.07.2023 JP 2023111062**

(71) Applicant: **Tohoku University**
**Sendai-shi, Miyagi 980-8577 (JP)**

(72) Inventors:
• **FUKUHARA, Mikio**
  **Sendai-shi, Miyagi 980-8577 (JP)**
• **YOKOTSUKA, Tomonori**
  **Sendai-shi, Miyagi 980-8577 (JP)**
• **HASHIDA, Toshiyuki**
  **Sendai-shi, Miyagi 980-8577 (JP)**

(74) Representative: **Plougmann Vingtoft a/s**
**Strandvejen 70**
**2900 Hellerup (DK)**

(54) **SEMICONDUCTOR ELECTRICITY STORAGE MATERIAL, ELECTRICITY STORAGE BODY, LAYERED ELECTRICITY STORAGE BODY**

(57) [Problem] To provide a semiconductor electricity storage material, an electricity storage body and a layered electricity storage body, including a biomaterial and having semiconductor properties and simultaneously electricity storage properties.

[Solution] The semiconductor electricity storage material has fibers containing chitin or chitosan as the main component, is in the form of a sheet, and has a density of 2 g/cm$^3$ or less. The fibers are preferably crystallized and amorphous fibers and preferably include bundles or particulate aggregates of chitin nanofibers or chitosan nanofibers with a width of 3 to 400 nm. The semiconductor electricity storage material is preferably an n-type bulk semiconductor and preferably has N-type negative resistance.

FIG.5

**Description**

Field of the Invention

The present invention relates to a semiconductor electricity storage material, an electricity storage body and a layered electricity storage body.

Description of Related Art

Semiconductors are electronic parts which have been used for light electric elements such as transistors using properties in which the conductivity is remarkably changed due to introduction of impurities and influences of e.g. heat, light, magnetic field, voltage, current and radiation, and are essential parts for electronic equipment. The semiconductors have been widely applied to e.g. particularly various types of diodes, transistors, FETs, SITs, RAMs, ROMs and CCDs. In recent years, high-performance IT products such as cellphones and micro-storage devices and electric vehicle batteries have rapidly evolved and semiconductors which are yet smaller and have high capacity and high functions such as memory have been increasingly demanded. Products adapted to a smart grid (next generation power grid) society fitted for green innovation (low-carbonization) to prevent global warming particularly have been demanded. The expansion of the market for condensers such as inverters for e.g. motor vehicles, IT equipment and energy saving has steadily moved at an average annual rate of about 3.7% and reached 1 trillion market.

Inorganic materials and organic materials have been used in the past as a material for such semiconductors. These are all artificial and many materials are harmful to global environmental preservation and survival for organisms including human living. Therefore, as the semiconductor materials used, those not using toxic elements such as arsenic, lead, cadmium, beryllium and mercury and environmental pollutants such as lithium, chromium and sulfur are desired. That is, even for semiconductors, inexpensive materials harmless to health have been demanded.

The semiconductors are roughly classified into for high voltage power circuits (heavy electricity) and for electronic and electrical equipment circuits (light electricity) depending on uses. Among these, as main semiconductor materials for electronic and electrical equipment circuits in the light electric field, Si and compound semiconductors are mainly used and a metal/semiconductor-type transistor including an amorphous Ni-Nb-Zr-H alloy as a material, for example, have been developed by the present inventors (see e.g. Non-Patent Literatures 1 to 5 or Patent Literature 1). Organic semiconductors are also heavily used as a material for organic ELs, which have been a main member for television and smartphone products, and for organic solar batteries.

Among parts of organic semiconductors, there are those causing an increase in carbon dioxide and also those becoming microplastics causing marine pollution and the production of such parts has been avoided around the world from the viewpoint of animal and plant protection and global environmental preservation. From this viewpoint, the development of semiconductors which have a smaller environmental burden on production and disposal and a lightweight and use wood and plant fibers (cellulose) obtained from plants having high elastic performance is the direction of global environmental preservation which fits the circumstances.

Semiconductors using a carbon neutral biomaterial have not been used in the past; however, n-type semiconductors from kenaf, a non-wood annual grass, and conifers which typify wood are discovered by the present inventors by focusing on the use of global environment-friendly and recyclable plant fibers. Direct current/alternating current elements, insulator/metal conductive switching elements, biomaterials having rectification action and ambient temperature transistors made using a fiber material from cellulose molecules obtained from wood and plant fibers (pulp) have been developed (see e.g. Non-Patent Literature 6).

Condensers (capacitors), meanwhile, are originally electronic parts which store and release a charge (electrical energy) by capacitance, and play roles as e.g. power supply stability, a backup circuit, a coupling element and a noise filter in mobile electronic equipment such as personal computers and cellphones, and thus are essential parts for electronic equipment. In recent years, high-performance IT products such as cellphones and micro-storage devices and electric vehicle batteries have rapidly evolved and condensers which are yet smaller and have high capacity and high functions such as memory have been increasingly demanded.

Conventional condensers include, for example, amorphous titania, amorphous alumina or an amorphous polymer as a material and are characterized by having unevenness of an electric insulator on the surface thereof (see e.g. Non-Patent Literatures 7 to 15). The condensers, however, are all artificial, and it is not preferred to use a condenser using a harmful compound such as Li or Pb in view of global environmental preservation. On the contrary, by focusing on the use of recyclable plant fibers, it is discovered by the present inventors that TEMPO oxidized cellulose nanofibers (CNF) using a biomaterial from conifers express a strong electricity storage effect, and an electricity storage material and an ultra-electricity storage body which can store electricity in direct current and alternating current and are made using a fiber material from cellulose molecules obtained from wood and plant fibers (pulp) have been developed (see e.g. Non-Patent Literatures 16 and 17 or Patent Literature 2).

Citation List

Non-Patent Literature

Non-Patent Literature 1: M. Fukuhara, A. Kawashima, S. Yamaura, and A. Inoue, "Coulomb oscillation of a proton in a Ni-Nb-Zr-H glassy alloy with multiple junctions", Appl. Phys., 2007, 90, 203111

Non-Patent Literature 2: M. Fukuhara and H. Kawarada, "Room-temperature amorphous alloy field-effect transistor exhibiting particle and wave electronic transport", J. Appl. Phys., 2015, 117, 084302

Non-Patent Literature 3: M. Fukuhara, H. Yoshida, K. Koyama, A. Inoue, Y. Miura, "Electronic transport behaviors of Ni-Ngb-Zr-H glassy alloys", J. Appl. Phys., 2010, 107, 033703

Non-Patent Literature 4: Mikio Fukuhara, Hajime Yoshida and Hiroshi Kawarada, "Effect of hydrogen and cluster morphology on the electronic behavior of Ni-Nb-Zr-H glassy alloys with subnanometer-sized icosahedral $Zr_5Ni_5Nb_5$ clusters", Euro. Phys. J., D, 2013, 67:40

Non-Patent Literature 5: M. Fukuhara and H. Kawarada, "Room-temperature amorphous alloy field-effect transistor exhibiting particle and wave electronic transport", J. Appl. Phys., 2015, 117, 084302

Non-Patent Literature 6: M. Fukuhara, T. Yokotsuka, T. Hashida, F. Ogawa, T. Sakamoto, M. Takeda, S. Arai, "A novel n-type semiconducting biomaterial", Scientific Reports, 2022, 12, 21899

Non-Patent Literature 7: M. Fukuhara, H. Yoshida, M. Sato, K. Sugawara, T. Takeuchi, I. Seki, and T. Sueyoshi, "Superior electric storage in de-alloyed and anodic oxidized Ti-Ni-Si glassy alloy ribbons", Phys. Stat. Sol. RRL, 2013, 7(7), p.477-480

Non-Patent Literature 8: M. Fukuhara and K. Sugawara, "Electric charging/discharging characteristics of super capacitor, using de-alloying and anodic oxidized Ti-Ni-Si amorphous alloy ribbons", Nanoscale. Res. Lett., 2014, 9, p.253

Non-Patent Literature 9: M. Fukuhara and K. Sugawara, "Anodic oxidization of Ti-Ni-Si amorphous alloy ribbons and their capacitive and resistive properties", Thin Solid Films, 2015, 595, 1-4

Non-Patent Literature 10: M. Fukuhara, T. Kuroda and F. Hasegawa, "Amorphous titanium-oxide supercapacitors", Sci. Rep., 2016, 6, 35870

Non-Patent Literature 11: M. Fukuhara, T. Kuroda, F. Hasegawa and T. Sueyoshi, "Superior electric storage on an amorphous perfluorinated polymer surface," Sci. Rep., 2016, 6, 22012

Non-Patent Literature 12: M. Fukuhara, T. Kuroda, F. Hasegawa, T. Hashida, E. Kwon and K. Konno, "Amorphous aluminum-oxide supercapacitors," EuroPhys. Lett., 2018, 123, 58004

Non-Patent Literature 13: M. Fukuhara, T. Kuroda, F. Hasegawa, Y. Shirai, T. Suwa, T. Hashida, and M. Nishijima, "Amorphous titanium-oxide supercapacitors with high capacitance", EuroPhys. Lett., 2019, 128, 58001

Non-Patent Literature 14: M. Fukuhara, T. Kuroda, F. Hasegawa, T. Hashida, M. Takeda, K. Konnno, and N. Fujima, "AlO6 clusters' electric storage effect in amorphous alumina supercapacitors", Sci. Rep., 2021, 11, 1699

Non-Patent Literature 15: M. Fukuhara, T. Yokotsuka, T. Hashida, K. Yamaguchi, and N. Fujima, "Amorphous alumina supercapacitors with voltage-charging performance", EuroPhys. Lett., 2023, 141, 36003

Non-Patent Literature 16: M. Fukuhara, T. Kuroda, F. Hasegawa, T. Hashida, and M. Takeda, N. Fujima, M. Morita, and T. Nakatani, "Amorphous cellulose nanofiber supercapacitors", Sci. Rep., 2021, 11, 6436

Non-Patent Literature 17: M. Fukuhara, T. Yokotsuka, T. Hashida, T. Miwa, N. Fujima, M. Morita, and T. Nakatani, and F. Nonomura "Amorphous cellulose nanofiber supercapacitors with voltage-charging performance", Sci. Rep., 2022, 12, 5619

Patent Literature

Patent Literature 1: WO2011/037003
Patent Literature 2: WO2021/166813

Summary of the Invention

Technical Problem

However, in semiconductors using a biomaterial described in Non-Patent Literature 6, the electricity storage effect is hardly recognized and also in electricity storage materials including a biomaterial described in Non-Patent Literatures 16 and 17 and Patent Literature 2, remarkable semiconductor properties are not recognized. As described above, a biomaterial having semiconductor properties and simultaneously electricity storage properties has not existed until now.

The present invention has been made by focusing on such problems and an object thereof is to provide a semiconductor electricity storage material, an electricity storage body and a layered electricity storage body including a biomaterial and having semiconductor properties and simultaneously electricity storage properties.

Solution to Problem

The present inventors found that semiconductor properties were expressed by a quantum size effect forming an electric double layer of electron and proton in a thin film when using, for example, crystallized/amorphous CNF having CNF bundles with 3 to 400 nm generated by a mechanical defibration method, and simultaneously electricity storage properties appeared by the acetamide group and the amino group of the C2 bond. That is, the present inventors found that this phenomenon was a phenomenon which occurs when proton tunneling (solitonic proton) is formed in crystallized and amorphous fibers and aggregates thereof as with the case of the past amorphous Ni-Nb-Zr-H alloy.

The present inventors also paid attention to that in chitin represented by the molecular formula $(C_8H_{13}NO_5)_n$ and chitosan represented by $(C_6H_{11}NO_4)$, and being a nitrogen-containing polysaccharide polymer, dipoles made by a hydroxy group (OH group) and an acetamide group or amino group (N-O group) were ordered in the same direction. It was found that this structurally acted in the same manner as a one dimensional hydrogen bond chain of water and thus exhibited the behavior of a chain of protonic solitons and could form an electric double layer with electron. As described above, the present inventors reached the present invention.

That is, the semiconductor electricity storage material according to the present invention is characterized by having fibers containing chitin or chitosan as a main component, being in the form of a sheet, and having a density of 2 $g/cm^3$ or less.

The semiconductor electricity storage material according to the present invention has fibers containing chitin or chitosan, a natural amino polysaccharide, as a main component and includes a biomaterial. The semiconductor electricity storage material according to the present invention contains as a main component chitin obtained from exoskeletons of crustacean such as crabs or shrimps, or chitosan obtained by deacetylation of chitin by e.g. a boiling treatment in concentrated alkali, and by fiberizing this, dipoles in which countless hydroxy groups are bound to acetamide groups in chitin and amino groups in chitosan can be formed on the inner surface. Because of this, the molecules are easily formed into a sheet by the hydrogen bonds as with the case of cellulose in which β-glucose is polymerized and thus an electric double layer, a base of proton transfer, can be instantly formed. Because of this, the semiconductor electricity storage material according to the present invention has a high dielectric domain structure by the formation of electric double layers and can allow semiconductor properties and simultaneously electricity storage properties to appear.

The semiconductor electricity storage material according to the present invention is represented by an equivalent circuit having two electrical circuits each including an electric double layer joined to each other in parallel. Because of this, the semiconductor electricity storage material according to the present invention can be a transistor expressing various functions. It should be noted that in the semiconductor electricity storage material according to the present invention, dipoles having positive charge made by the (N-O) group of the acetamide group or amino group contribute to physisorption of electron having negative charge.

In the semiconductor electricity storage material according to the present invention, the electrical resistivity of two electric double layers in the equivalent circuit is preferably $10^{-1}$ to $10^{12}$ $\Omega$m and more preferably $10^3$ $\Omega$m or more and $10^7$ $\Omega$m or less. In addition, the electric capacity of each electric double layer is preferably $10^{-8}$ to $10^{-5}$ F.

The semiconductor electricity storage material according to the present invention is in the form of a sheet and has preferably a thickness of 100 $\mu$m or less and is particularly preferably in the form of a thin film with 20 $\mu$m or less. In this case, a weight saving effect particularly can be expected.

In the semiconductor electricity storage material according to the present invention, the "fibers containing chitin or chitosan as a main component" mean fibers in which crabs or shrimps, or an insect such as silkworms, cicadas or beetles, or anti-bacteria such as filamentous fungi are used as a raw material, and more specifically fibers containing above 50 mass% of cuticle covering the body surface of many invertebrates such as exoskeletons, i.e. the outer skin of arthropods and crustacean and the surface of periostraca of mollusks, or of chitin or chitosan having a main component of e.g. the cell membrane of fungus such as mold or mushrooms as an origin component.

In the semiconductor electricity storage material according to the present invention, the fibers are preferably crystallized/amorphous fibers. In this case, the fibers may contain nanocrystals. The fibers may also be amorphous fibers having atomic vacancy. In addition, the material for the crystallized/amorphous fibers may be any material as long as an electric double layer can be formed on the inner surface, and it may be, for example, chitin fibers or chitosan fibers. As the chitin fibers and the chitosan fibers, chitin nanofibers and chitosan nanofibers respectively are preferably used. The chitin nanofibers and chitosan nanofibers can increase the electron adsorption ability by a quantum size effect with the minus 6th power law to increase the work function and can further increase a dielectric domain.

[Chitin fibers and chitosan fibers]

The chitin fibers and the chitosan fibers may be any type of fiber and a mucopolysaccharide polymer obtained from e.g. arthropods, mollusks (e.g. squid), insects (e.g. silkworms, beetles, cicadas, etc.), a product of a microorganism such as a fungus (e.g. mold, mushrooms) as its origin, for example, can be used. In addition, the fibers are preferably fibers derived from an animal and particularly preferably chitosan fibers from crabs, shrimps or mantis shrimps.

In the chitin fibers and the chitosan fibers, the average fiber diameter may be any size. The average fiber length and the average fiber diameter of the chitin fibers and the chitosan fibers can be adjusted by an oxidation treatment and a defibration treatment. Herein, the nanofibers after general purification are ultrafine fibers with a fiber diameter of about 3 to 400 nm depending on the defibration degree. The average fiber diameter and average fiber length of the nanofibers are obtained by averaging the fiber diameter and the fiber length from the results obtained by observing each fiber using an atomic force microscope (AFM) or a transmission electron microscope (TEM).

The chitin nanofibers and the chitosan nanofibers have preferably an average aspect ratio of 50 or less and particularly preferably aggregate in the form of particles. It should be noted that the particles indicate those finely crushed by defibration. In addition, the average aspect ratio can be calculated by the following formula:

$$\text{Average aspect ratio} = \text{average fiber length/average fiber diameter.}$$

[Defibration treatment of chitin fibers and chitosan fibers]

The method for the defibration treatment of the chitin fibers and chitosan fibers may be any method and is preferably, for example, a method including applying a strong shear force to a dispersion of chitin fibers or chitosan fibers using e.g. a high speed rotating, colloid mill, high pressure, roll mill or ultrasonic machine. As a defibration device, a wet high pressure or ultrahigh pressure homogenizer which can apply a pressure of 50 MPa or more and a strong shear force to a dispersion of chitin fibers or chitosan fibers is preferably used for efficient defibration. The pressure in the defibration is preferably 100 MPa or more and further preferably 140 MPa or more. The number of treatments (paths) in the defibration device may be once and is preferably twice or more.

In the dispersion treatment to form a dispersion, it is preferred that the chitin fibers or chitosan fibers be dispersed in a solvent. The solvent may be any solvent as long as it can disperse the chitin fibers or the chitosan fibers, and it may be, for example, water, an organic solvent (e.g. ethanol, acetic acid, lactic acid or succinic acid), or a mixed solvent thereof. The cellulose fibers are hydrophilic and thus the solvent is particularly preferably water.

In addition, prior to the defibration and dispersion treatments by a high pressure homogenizer, the chitin fibers and the chitosan fibers may be subjected to a preliminary treatment as needed. The preliminary treatment can be carried out using, for example, a mixing, stirring, emulsifying and dispersing device such as a high speed shear mixer.

In the semiconductor electricity storage material according to the present invention, the chitin fibers and the chitosan fibers may be in a water dispersion state obtained after the defibration treatment or may be subjected to a post-treatment as needed. The post-treatment is, for example, drying (a freeze drying method, a spray drying method, a tray drying method, a drum drying method, a belt drying method, a drying method by thin spreading on e.g. a glass plate, a fluid bed drying method, a microwave drying method, a heat generating fan type vacuum drying method, etc.), redispersion in water (any dispersion device may be used), crushing (crushing using an apparatus such as a cutter mill, a hammer mill, a pin mill, a jet mill or a bead mill, etc.) or high speed rotating filtration by e.g. a FILMIX disperser.

In the semiconductor electricity storage material according to the present invention, the fibers preferably include bundles or particulate aggregates of chitin nanofibers or the chitosan nanofibers with a width of 3 to 400 nm. In this case, the formation efficiency of an electric double layer can be increased.

In the semiconductor electricity storage material according to the present invention, the specific surface area of the fibers is preferably 750 to 900 $m^2$/g and particularly preferably 800 to 900 $m^2$/g.

The semiconductor electricity storage material according to the present invention is preferably an n-type bulk semiconductor. In this case, it can be represented by an equivalent circuit including two parallel circuits having two bands of a low current and low resistance band and a high current and high resistance band.

The semiconductor electricity storage material according to the present invention preferably includes a bulk semiconductor having N-type negative resistance. It preferably shows N-type negative resistance particularly at a high voltage load of 1 kV/cm or more. In this case, it can be used as, for example, a direct current/alternating current switching element or a switching element between metal and an insulator and also has rectification action.

The electricity storage body according to the present invention is characterized by having the semiconductor electricity storage material according to the present invention, and a pair of metal electrodes, each provided on both surfaces of the semiconductor electricity storage material so that the semiconductor electricity storage material is put between the electrodes.

The electricity storage body according to the present invention is equivalent to a lumped parameter condenser having two macroscopic condensers between metal electrodes. In the electricity storage body according to the present invention, each metal electrode includes, for example, Al, Cu, gold or polythiophene and can be produced using micro electro mechanical systems (M(N)EMS) by a sputtering method, a casting method or a doctor blade method. It is preferred that the electricity storage body according to the present invention be able to operate at -269°C to 300°C.

The electricity storage body according to the present invention may include a parallel integrated material having a plurality of the semiconductor electricity storage materials arranged between a pair of electrodes including an electric conductor. In this case, an electricity storage ability of 600 mJ/m$^2$ or more and a voltage resistance of 1 MV/m or more can be obtained. Each electrode is, for example, metal or a conductive polymer.

The layered electricity storage body according to the present invention is characterized by including a layered body obtained by stacking a plurality of the electricity storage bodies according to the present invention.

The layered electricity storage body according to the present invention can be parallel-laminated by, for example, various M(N)EMS methods. The layered electricity storage body according to the present invention can be represented by a semiconductor in which a plurality of parallel equivalent circuits are bound to each other in an electrical lumped parameter manner and an electricity storage body in which a plurality of parallel equivalent circuits are bound to each other in an electrical distributed parameter manner.

The semiconductor electricity storage material, electricity storage body and layered electricity storage body according to the present invention can be used as a semiconductor, for example, an alternating current transmitter, a control apparatus and an overcurrent preventing switch in a microelectronic circuit. They also can be used for e.g. electronic and electric boards in e.g. various types of amplifiers, a microwave transmitter, a pump source in a parametric amplifier, a police radar, a door opening/closing system, a trespass detection system, a shunt regulator and a protection circuit.

The semiconductor electricity storage material, electricity storage body and layered electricity storage body according to the present invention can be used as an electricity storage body, for example, an alternating current condenser in a microelectron circuit and an electricity storage body on the back surface of a solar panel. They can be also used for e.g. electronic and electric boards in e.g. various types of backup power modules, a coupling element, a noise filter, a highly sensitive acceleration sensor, a device for preventing high output transformer cut-off and an emergency power supply device for motor vehicles or ships. They are also expected as a direct current electricity storage material from solar light in the space in the future. As an electricity storage body, there are for example an antistatic sheet, a lightning protection paper, an electronic equipment shielding paper, a film, positively charged dust adsorption paper and a paint film.

Advantageous Effect of the Invention

According to the present invention, it is possible to provide a semiconductor electricity storage material, an electricity storage body and a layered electricity storage body including a biomaterial and having semiconductor properties and simultaneously electricity storage properties.

Brief Description of the Drawings

FIGS. 1 are perspective views showing the molecular structures of chitin (a) and chitosan (b) forming fibers in a semiconductor electricity storage material in an embodiment of the present invention.
FIG. 2 is an electrical circuit diagram showing an equivalent circuit in a semiconductor electricity storage material in the embodiment of the present invention.
FIG. 3 is a graph showing the results of the frequency analysis of current in an N-type negative resistance region of a semiconductor electricity storage material in the embodiment of the present invention.
FIG. 4 is an atomic force microscope (AFM) image of the surface of a semiconductor electricity storage material in the embodiment of the present invention.
FIG. 5 is a graph of the complex plane representation of impedance and a nyquist diagram of a semiconductor electricity storage material in the embodiment of the present invention.
FIG. 6 is a graph showing I-V characteristics of a semiconductor electricity storage material in the embodiment of the present invention.
FIG. 7 is a graph showing a discharging curve of a semiconductor electricity storage material in the embodiment of the present invention.
FIG. 8 is a graph showing R-V characteristics of a semiconductor electricity storage material in the embodiment of the present invention.

FIGS. 9 are side views (a) to (c) showing a method for producing a layered electricity storage body in the embodiment of the present invention by the MEMS method, a perspective view (d) and a side view (e) of a layered electricity storage body in the embodiment of the present invention, and a perspective view (f) and a plane view (g) of an equivalent circuit of a produced layered electricity storage body.

Detailed Description of the Invention

The embodiment of the present invention will be now be described based on e.g. the drawings and examples.

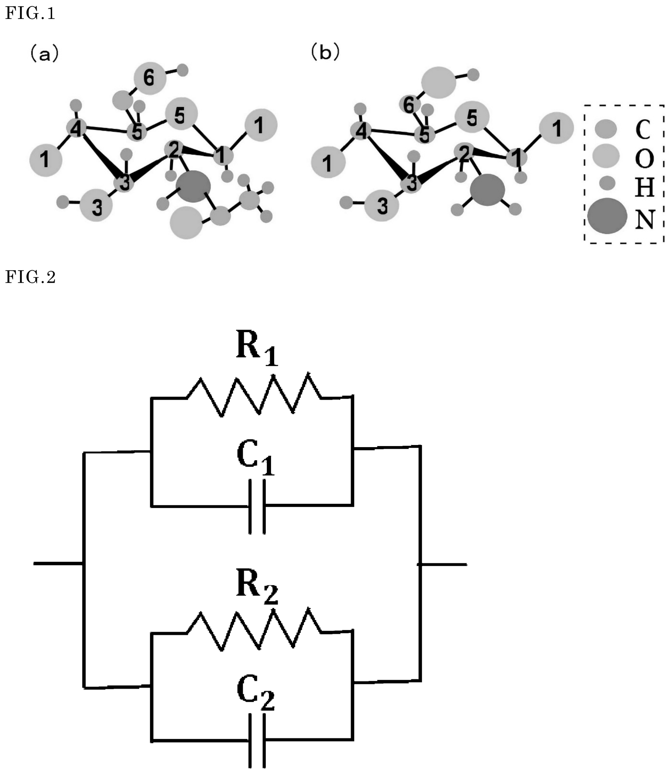

The semiconductor electricity storage material in the embodiment of the present invention includes crystallized/amorphous fibers containing as a main component chitin shown in FIG. 1(a) or chitosan shown in FIG. 1(b) and is in the form of a sheet having much unevenness on the surface.

The semiconductor electricity storage material in the embodiment of the present invention has a high dielectric domain structure in which electric double layers are formed and can express semiconductor properties and simultaneously electricity storage properties. Because of this, as shown in FIG. 2, the semiconductor electricity storage material in the embodiment of the present invention is equivalent to an electrical lumped parameter circuit having two electrical circuits each including an electric double layer joined in parallel. Because of this, the semiconductor electricity storage material in the embodiment of the present invention can be a transistor expressing various functions.

The semiconductor electricity storage material in the embodiment of the present invention was produced as described below and e.g. electric properties were examined. It should be noted that the following examples are provided merely for explanation of the present invention and for reference of specific aspects thereof and do not limit or restrict the scope of the invention disclosed in this application.

Example 1

A semiconductor electricity storage material in the embodiment of the present invention of sample 1 was produced as described below.

Crab shells of red snow crab having a low calcium content were used as a raw material. The crab shells were immersed in 2 mol/L (2 N) hydrochloric acid for 5 hours, then washed with water, dried and crushed and further subjected to decalcification while stirring in hydrochloric acid for 48 hours. After that, the obtained shells were put in 1 mol/L (1 N) sodium hydroxide and a heating operation at 100°C for 12 hours was repeated 4 times to remove protein. Furthermore, drying was carried out to obtain crude chitin. Subsequently, the crude chitin was immersed in a 0.5% potassium permanganate solution for an hour, washed with water, and then put in a 1% oxalic acid solution. The obtained solution was stirred at 60°C for 40 minutes to obtain pure white $\alpha$-chitin. After that, the defibration treatment was carried out by a roll mill method.

Using $\alpha$-chitin after the defibration treatment, a 2% aqueous chitin solution slurry was produced by a doctor blade method and evaporation of moisture and drying on a 100°C hot plate were then carried out to produce an $\alpha$-chitin sheet of the sample 1.

The surface of the produced $\alpha$-chitin sheet of the sample 1 was observed by an atomic force microscope (AFM) and it was verified that the sheet was formed from bundles of chitin nanofibers in the form of fibers with a width of 3 to 400 nm. It was also verified that the chitin nanofibers were amorphous fibers.

A pair of metal electrodes were each provided on both surfaces of the $\alpha$-chitin sheet of the sample 1 so that the sample 1 was put between the electrodes and various types of measurement were carried out. First, an alternating current signal was applied between the electrodes by an alternating current impedance method to measure the absolute value of impedance of the sample 1 and the phase difference between voltage and current. It should be noted that carbon with a work function of 5.0 and Al with 4.2 were used for the electrodes to obtain a schottky coupled circuit. The measurement results were plotted on a complex plane and it was verified that the results were plotted along the shape of two large and small arcs placed side by side.

Therefore, the electrical resistivity of resistance $R_1$ and $R_2$ and the electric capacity of the condenser $C_1$ and $C_2$ were changed in the equivalent circuit shown in FIG. 2 and the nyquist diagram best matching with the measurement results was obtained by a least squares method. The electrical resistivity and the electric capacity were $R_1 = 35$ kΩm and $R_2 = 21$ kΩm and $C_1 = 3 \times 10^{-8}$ F and $C_2 = 7 \times 10^{-7}$ F. These results verified that the sample 1 was equivalent to an electrical lumped parameter circuit having two macroscopic condensers (electric double layers) as shown in FIG. 2 and formed a semiconductor having two bands of a low current and low resistance band and a high current and high resistance band.

Subsequently, a voltage was applied between the electrodes in the sample 1 to measure I-V characteristics at ambient temperature. The results verified that the sample 1 showed semiconductor properties showing N-type negative resistance between -70 V and -60 V. It was also verified that the sample 1 showed rectification in which a current does not flow in a negative charge region but sharply increases in a positive charge region.

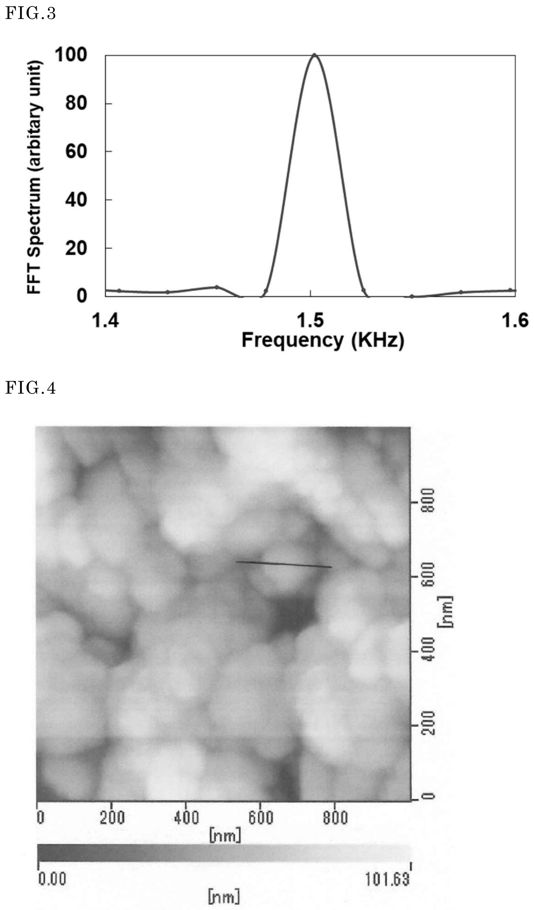

Currents between the electrodes between -70 V and -60 V were measured and the frequency analysis thereof was carried out. The results are shown in FIG. 3. As shown in FIG. 3, the vibration frequency peak was verified at 1.5 kHz. From the results, the sample 1 is considered to switch direct current/alternating current. It should be noted that the results are similar to the Gunn effect recognized in GaAs (gallium arsenide) semiconductors.

Subsequently, a discharging curve when the sample 1 was charged at 450 V for 3 seconds and then discharged, was obtained. The electricity storage amount was obtained from an area surrounded by the discharging curve, the voltage axis and the time axis and the result was 502.5 mJ/m$^2$.

The density of the sample 1 was measured and the result was 1.4 g/cm$^3$. The sample 1 was verified to have a low density, 2 g/cm$^3$ or less. It was also verified that the sample 1 could operate in a furnace for low to medium temperature in a range from -269°C to 200°C up to 500 V. The specific surface area of the sample 1 was measured by the BET adsorption method and the result was 800 m$^2$/g.

Example 2

A semiconductor electricity storage material in the embodiment of the present invention of sample 2 was produced as described below.

The $\alpha$-chitin before the defibration treatment of the sample 1 was subjected to the defibration treatment by a homogenizer method, then put in a 48% sodium hydroxide solution and allowed to react at 120°C for 30 minutes to obtain chitosan. From the chitosan, a 2% aqueous chitosan solution slurry was produced and dropped on the Si substrate of a spin coater. The Si substrate was rotated at 500 rpm to obtain a thin film and evaporation of moisture and drying on a 100°C hot plate were then carried out to produce a chitosan sheet.

The surface of the produced chitosan sheet of the sample 2 was observed by an atomic force microscope (AFM). The AFM image of the sample 2 is shown in FIG. 4. As shown in FIG. 4, it was verified that the chitosan sheet of the sample 2 was formed from bundles or connected particulate aggregates of chitosan nanofibers in the form of fibers with 200 to 400 nm. It was also verified that the chitosan nanofibers were amorphous fibers.

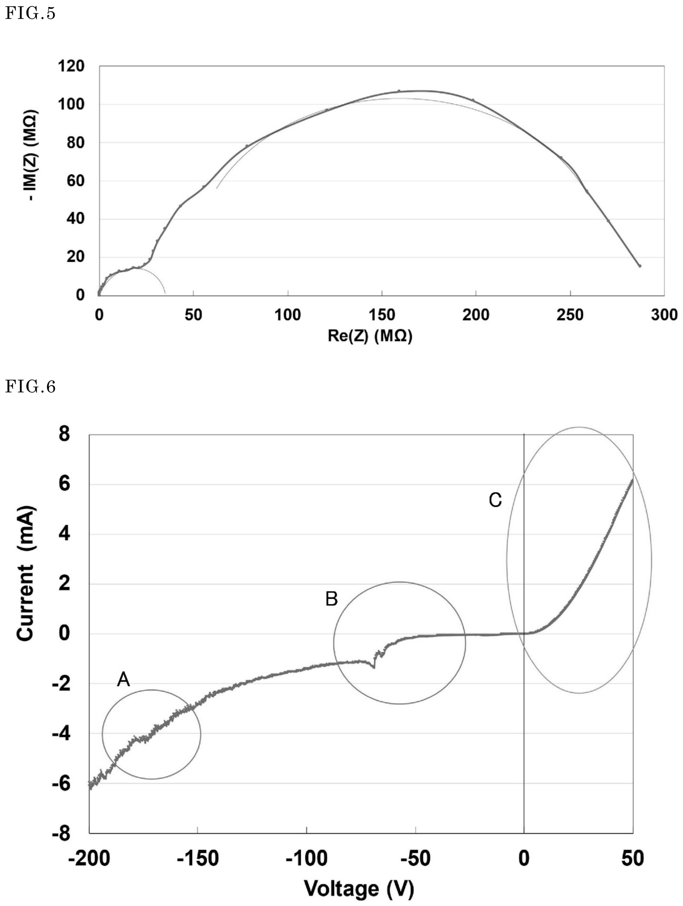

A pair of metal electrodes were each provided on both surfaces of the chitosan sheet of the sample 2 so that the sample 2 was put between the electrodes and various types of measurement were carried out. First, the absolute value of impedance of the sample 2 and the phase difference between voltage and current were measured by the alternating current impedance method in the same manner as in Example 1. The measurement results were plotted on a complex plane, which is shown in FIG. 5. As shown in FIG. 5, it was verified that the measurement results were plotted along the shape of two large and small arcs placed side by side.

Therefore, the electrical resistivity of resistance $R_1$ and $R_2$ and the electric capacity of the condensers $C_1$ and $C_2$ were changed in the equivalent circuit shown in FIG. 2 in the same manner as in Example 1 and the nyquist diagram best matching with the measurement results shown in FIG. 5 was obtained by a least squares method. The nyquist diagram is shown with the solid line in FIG. 5. The electrical resistivity and the electric capacity at this time were $R_1 = 17$ k$\Omega$m and $R_2 = 5$ k$\Omega$m and $C_1 = 3 \times 10^{-7}$ F and $C_2 = 5 \times 10^{-6}$ F. As shown in FIG. 5, the measurement results almost match with the nyquist diagram and thus it was verified that as with the case of the sample 1, the sample 2 was also equivalent to an electrical lumped parameter circuit having two macroscopic condensers (electric double layers) shown in FIG. 2 and formed a semiconductor having two bands of a low current and low resistance band and a high current and high resistance band.

Subsequently, a voltage was applied between the electrodes in the sample 2 to measure I-V characteristics at ambient temperature. The results are shown in FIG. 6. As shown in FIG. 6, it was verified that the sample 2 showed semiconductor properties showing N-type negative resistance between -180 V and -170 V and between -70 V and -60 V (the regions surrounded by the circles A and B in the graph). It was also verified that the sample 2 showed rectification action in which a current does not flow in a negative charge region but sharply increases in a positive charge region (the region surrounded by the circle C in the graph).

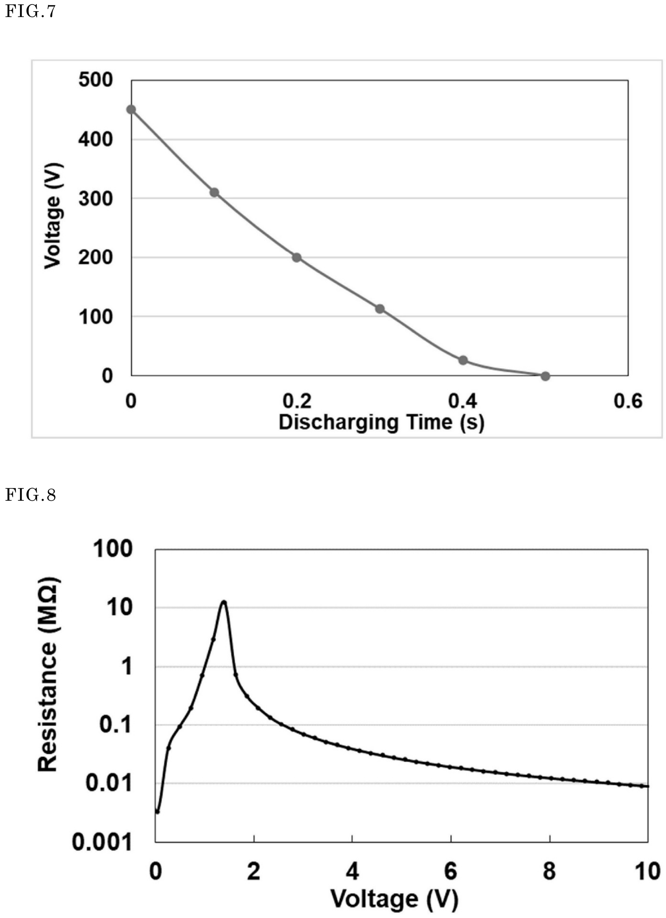

Subsequently, a discharging curve when the sample 2 was charged at 450 V for 3 seconds and then discharged, is shown in FIG. 7. The electricity storage amount was obtained from an area surrounded by the discharging curve, the voltage axis and the time axis (Discharge Time) shown in FIG. 7 and the result was 1004.4 mJ/m$^2$. It should be noted that the electricity storage amount is considered to improve at a high voltage load, 400 V or more.

The density of the sample 2 was measured and the result was 1.0 g/cm$^3$. The sample 2 was verified to have a low density, 2 g/cm$^3$ or less. It was also verified that the sample 2 could operate in a furnace for low to medium temperature in a range from -269°C to 200°C up to 500 V. The specific surface area of the sample 2 was measured by the BET adsorption method and the result was 800 m$^2$/g.

Example 3

A semiconductor electricity storage material in the embodiment of the present invention of sample 3 was produced as described below.

Squid skeletons were used as a raw material. This raw material was immersed in 2 mol/L (2 N) hydrochloric acid for 5 hours, then washed with water, dried and crushed and further subjected to decalcification while stirring in hydrochloric acid for 48 hours. After that, the obtained skeletons were put in 1 mol/L (1 N) sodium hydroxide and a heating operation at 100°C for 12 hours was repeated 4 times to remove protein. Furthermore, drying was carried out to obtain crude chitin. Subsequently, the crude chitin was immersed in a 0.5% potassium permanganate solution for an hour, washed with water, and then put in a 1% oxalic acid solution. The obtained solution was stirred at 60°C for 40 minutes to obtain β-chitin. This β-chitin is easy to handle because the sugar chains are placed in parallel and hydrogen bonds are loose; however, the yield when using the squid skeletons, a raw material, is smaller than the yield when using the crab, a raw material in the sample 1.

The β-chitin was subjected to the defibration treatment by a cutter mill method and then a 2% aqueous chitin solution slurry was produced by a doctor blade method. Evaporation of moisture and drying on a 50°C hot plate were carried out to produce a β-chitin sheet of the sample 1.

The surface of the produced β-chitin sheet of the sample 3 was observed by an atomic force microscope (AFM) and it was verified that the sample 3 was formed from bundles of chitin nanofibers in the form of fibers with a width of 3 to 400 nm. It was also verified that in the chitin nanofibers, 5% nanocrystals were included in amorphous fibers.

A pair of metal electrodes were provided on both surfaces of the β-chitin sheet of the sample 3 so that the sample 3 was put between the electrodes and various types of measurement were carried out. First, the absolute value of impedance of the sample 3 and the phase difference between voltage and current were measured by an alternating current impedance method in the same manner as in Example 1 to obtain a nyquist diagram. The electrical resistivity and the electric capacity at this time were $R_1 = 14$ kΩm and $R_2 = 7$ kΩm and $C_1 = 5 \times 10^{-8}$ F and $C_2 = 4 \times 10^{-7}$ F. The results verified that as with the case of the sample 1, the sample 3 was also equivalent to an electrical lumped parameter circuit having two macroscopic condensers (electric double layers) shown in FIG. 2 and formed a semiconductor having two bands of a low current and low resistance band and a high current and high resistance band.

Subsequently, a discharging curve when the sample 3 was charged at 450 V for 3 seconds and then discharged, was obtained. The electricity storage amount was obtained from an area surrounded by the discharging curve, the voltage axis and the time axis and the result was 240.1 mJ/m$^2$.

Subsequently, a voltage was applied between the electrodes in the sample 3 to measure R-V characteristics at ambient temperature. The results are shown in FIG. 8. As shown in FIG. 8, it was verified that as the voltage increased, the resistance value of the sample 3 sharply increased by about 3 to 4 digits from 0 V to about 1.5 V and was then reduced by about 3 digits. The results are considered to be due to the switching effect between the metal and an insulator. This is considered to be not the effect of a pn junction semiconductor but the effect of a semiconductor having two bands of a low current and low resistance band and a high current and high resistance band peculiar to n-type bulk semiconductors.

The density of the sample 3 was measured and the result was 1.5 g/cm$^3$. The sample 3 was verified to have a low density, 2 g/cm$^3$ or less. It was also verified that the sample 3 could operate in a furnace for low to medium temperature in a range from -269°C to 200°C up to 500 V. The specific surface area of the sample 3 was measured by the BET adsorption method and the result was 800 m$^2$/g.

The sample types, defibration treatment method in the production, structure (category of crystal or amorphous), density, electrical resistivity, electric capacity and electricity storage amount in the semiconductor electricity storage materials in the samples 1 to 3 are summarized and shown in Table 1.

[Table 1]

| Sample | Sample type | Defibration treatment method | Category of crystal or amorphous | Density (g/cm$^3$) | Electrical resistivity (kΩm) | Electric capacity Cp (F) | Electricity storage amount (mJ/m$^2$) |
|---|---|---|---|---|---|---|---|
| 1 | α-Chitin sheet | Roll mill method | Amorphous | 1.4 | $R_1 = 35$ $R_2 = 21$ | $C_1 = 3 \times 10^{-8}$ $C_2 = 7 \times 10^{-7}$ | 502.5 |
| 2 | Chitosan sheet | Homogenizer method | Amorphous | 1.0 | $R_1 = 17$ $R_2 = 5$ | $C_1 = 3 \times 10^{-7}$ $C_2 = 5 \times 10^{-6}$ | 1004.4 |
| 3 | β- Chitin sheet | Cutter mill method | Amorphous, 5% nanocrystals | 1.5 | $R_1 = 14$ $R_2 = 7$ | $C_1 = 5 \times 10^{-8}$ $C_2 = 4 \times 10^{-7}$ | 240.1 |

As shown in Table 1, the semiconductor electricity storage materials in the samples 1 to 3 were formed from two electrical lumped parameter circuits having an alternating current electrical resistance $R_1$ of 14 to 35 kΩm and $R_2$ of 5 to 21 kΩm and an electric capacity $C_1$ including an electric double layer of $10^{-8}$ to $10^{-6}$ F and $C_2$ of $10^{-7}$ F to $10^{-5}$ F as shown in FIG.

2, and it was verified that this was a reason to allow a phenomenon by not pn junction but bulk n-type semiconductors to appear. In addition, the samples were verified to have a low density, 2 g/cm$^3$ or less. It was also verified that the samples 1 to 3 all had electricity storage properties and could operate in a range of -269°C to 200°C up to 500 V. It was also verified that the specific surface area of the samples 1 to 3 was 800 m$^2$/g. Because of these, the semiconductor electricity storage materials including a biomaterial of the samples 1 to 3 are considered to be an optimal material in the light electric field.

It was verified that when the sample 2 was irradiated with strong electron beams with 3 mA/m$^2$, it had an electricity resistance up to 200 keV. This is electricity resistance equal to or greater than twice higher than electricity resistance of carbon nanotube, 80 keV.

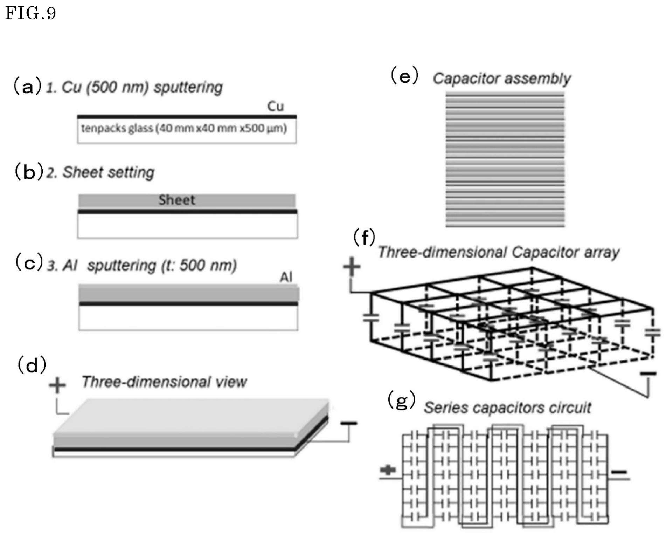

FIGS. 9 show a layered electricity storage body in the embodiment of the present invention.

As shown in FIGS. 9, the layered electricity storage body in the embodiment of the present invention is produced using the semiconductor electricity storage material in the form of a sheet of the sample 2 by the MEMS method as described below. As shown in FIG. 9(a), first, a Cu layer (thickness 500 nm) is formed by sputtering on the surface of a glass substrate (40 x 40 x 0.5 mm). As shown in FIG. 9(b), the sample 2 in the form of a sheet is then put on the Cu layer and as shown in FIG. 9(c), an Al layer (thickness 500 nm) is further formed thereon by sputtering. By doing this, the substrate having the carbon layer and Al layer as metal electrodes each on both surfaces of the semiconductor electricity storage material in the form of a sheet shown in FIG. 9(d) can be produced. It should be noted that this structure corresponds to the structure having metal electrodes each on both surfaces of the samples 1 to 3 used in various types of measurement in Examples 1 to 3.

Subsequently, the layered electricity storage body in the embodiment of the present invention shown in FIG. 9(e) can be produced by removing the glass substrate, using the remnant as a base body and stacking a plurality of base bodies. In the produced layered electricity storage body, the Al layer of the base body on the top and the carbon layer of the base body on the bottom are terminals and a plurality of semiconductor electricity storage materials are joined in parallel as shown in FIG. 9(f) and (g).

The semiconductor electricity storage material in the embodiment of the present invention can be widely used not only in the light electric field such as cellphones, drones and wall-mounted televisions but also in the heavy electric field such as ships and planes as well as motor vehicles using the light weight thereof. It can be also used for e.g. electronic and electric boards in e.g. power supply modules for e.g. a lightning arrester, welding and overdischarge prevention, a noise filter, sensors such as a door opening/closing system, a trespass detection system and a pedestrian safety system, a control apparatus in microelectronics, a remote vibration detector and a transmitter. As an electricity storage body, it is used for e.g. an antistatic sheet, lightning protection paper, an electronic equipment shielding paper, a film, positively charged dust adsorption paper and a paint film.

**Claims**

1. A semiconductor electricity storage material, having fibers containing chitin or chitosan as a main component, being in form of a sheet and having a density of 2 g/cm$^3$ or less.

2. The semiconductor electricity storage material according to claim 1, wherein the fibers are crystallized and amorphous fibers.

3. The semiconductor electricity storage material according to claim 1, wherein the fibers include bundles or particulate aggregates of chitin nanofibers or the chitosan nanofibers with a width of 3 to 400 nm.

4. The semiconductor electricity storage material according to claim 1, wherein a specific surface area of the fibers is 750 to 900 m$^2$/g.

5. The semiconductor electricity storage material according to claim 1, being an n-type bulk semiconductor.

6. The semiconductor electricity storage material according to claim 1, having N-type negative resistance.

7. An electricity storage body, having:

   the semiconductor electricity storage material according to any one of claims 1 to 6, and
   a pair of metal electrodes each provided on both surfaces of the semiconductor electricity storage material so that the semiconductor electricity storage material is put between the electrodes.

8. A layered electricity storage body, comprising

a layered body obtained by stacking a plurality of the electricity storage bodies according to claim 7.

FIG.1

(a) (b)

C
O
H
N

FIG.2

$R_1$

$C_1$

$R_2$

$C_2$

FIG.3

FIG.4

FIG.5

FIG.6

FIG.7

FIG.8

FIG.9

（a）1. Cu (500 nm) sputtering

Cu

tenpacks glass (40 mm x40 mm x500 μm)

（b）2. Sheet setting

Sheet

（c）3. Al sputtering (t: 500 nm)

Al

（d）Three-dimensional view

+

（e）Capacitor assembly

（f）Three-dimensional Capacitor array

+

（g）Series capacitors circuit

## INTERNATIONAL SEARCH REPORT

| International application No. |
|---|
| **PCT/JP2024/018185** |

| | |
|---|---|
| **A.** | **CLASSIFICATION OF SUBJECT MATTER** |

*H01G 11/56*(2013.01)i; *H01G 4/16*(2006.01)i; *H01G 9/028*(2006.01)i; *H01L 21/822*(2006.01)i; *H01L 27/04*(2006.01)i
FI:  H01G11/56; H01G4/16; H01G9/028 Z; H01L27/04 C

According to International Patent Classification (IPC) or to both national classification and IPC

| | |
|---|---|
| **B.** | **FIELDS SEARCHED** |

Minimum documentation searched (classification system followed by classification symbols)

H01G11/56; H01G4/16; H01G9/028; H01L21/822; H01L27/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2021/166813 A1 (TOHOKU UNIVERSITY) 26 August 2021 (2021-08-26) paragraphs [0021]-[0023], [0062], [0064]-[0065], [0092], fig. 8 | 1-8 |
| A | US 2007/0242415 A1 (MAXWELL TECHNOLOGIES, INC.) 18 October 2007 (2007-10-18) entire text, all drawings | 1-8 |

| ☐ Further documents are listed in the continuation of Box C. | ☑ See patent family annex. |
|---|---|

| | |
|---|---|
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/018185**

| Patent document cited in search report | | | Publication date (day/month/year) | Patent family member(s) | | | Publication date (day/month/year) |
|---|---|---|---|---|---|---|---|
| WO | 2021/166813 | A1 | 26 August 2021 | US | 2023/0071958 | A1 | |
| | | | | paragraphs [0020]-[0022], [0063], [0065]-[0066], [0105], fig. 8 | | | |
| | | | | EP | 4109714 | A1 | |
| | | | | CN | 115053309 | A | |
| | | | | KR | 10-2022-0136364 | A | |
| | | | | CA | 3166059 | A1 | |
| US | 2007/0242415 | A1 | 18 October 2007 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011037003 A

- WO 2021166813 A

**Non-patent literature cited in the description**

- **M. FUKUHARA** ; **A. KAWASHIMA** ; **S. YAMAURA** ; **A. INOUE**. Coulomb oscillation of a proton in a Ni-Nb-Zr-H glassy alloy with multiple junctions. *Appl. Phys.*, 2007, vol. 90, 203111
- **M. FUKUHARA** ; **H. KAWARADA**. Room-temperature amorphous alloy field-effect transistor exhibiting particle and wave electronic transport. *J. Appl. Phys.*, 2015, vol. 117, 084302
- **M. FUKUHARA** ; **H. YOSHIDA** ; **K. KOYAMA** ; **A. INOUE** ; **Y. MIURA**. Electronic transport behaviors of Ni-Ngb-Zr-H glassy alloys. *J. Appl. Phys.*, 2010, vol. 107, 033703
- **MIKIO FUKUHARA** ; **HAJIME YOSHIDA** ; **HIROSHI KAWARADA**. Effect of hydrogen and cluster morphology on the electronic behavior of Ni-Nb-Zr-H glassy alloys with subnanometer-sized icosahedral Zr5Ni5Nb5 clusters. *Euro. Phys. J., D*, 2013, vol. 67, 40
- **M. FUKUHARA** ; **T. YOKOTSUKA** ; **T. HASHIDA** ; **F. OGAWA** ; **T. SAKAMOTO** ; **M. TAKEDA** ; **S. ARAI**. A novel n-type semiconducting biomaterial. *Scientific Reports*, 2022, vol. 12, 21899
- **M. FUKUHARA** ; **H. YOSHIDA** ; **M. SATO** ; **K. SUGAWARA** ; **T. TAKEUCHI** ; **I. SEKI** ; **T. SUEYOSHI**. Superior electric storage in de-alloyed and anodic oxidized Ti-Ni-Si glassy alloy ribbons. *Phys. Stat. Sol. RRL*, 2013, vol. 7 (7), 477-480
- **M. FUKUHARA** ; **K. SUGAWARA**. Electric charging/discharging characteristics of super capacitor, using de-alloying and anodic oxidized Ti-Ni-Si amorphous alloy ribbons. *Nanoscale. Res. Lett.*, 2014, vol. 9, 253
- **M. FUKUHARA** ; **K. SUGAWARA**. Anodic oxidization of Ti-Ni-Si amorphous alloy ribbons and their capacitive and resistive properties. *Thin Solid Films*, 2015, vol. 595, 1-4

- **M. FUKUHARA** ; **T. KURODA** ; **F. HASEGAWA**. Amorphous titanium-oxide supercapacitors. *Sci. Rep.*, 2016, vol. 6, 35870
- **M. FUKUHARA** ; **T. KURODA** ; **F. HASEGAWA** ; **T. SUEYOSHI**. Superior electric storage on an amorphous perfluorinated polymer surface. *Sci. Rep.*, 2016, vol. 6, 22012
- **M. FUKUHARA** ; **T. KURODA** ; **F. HASEGAWA** ; **T. HASHIDA** ; **E. KWON** ; **K. KONNO**. Amorphous aluminum-oxide supercapacitors. *EuroPhys. Lett.*, 2018, vol. 123, 58004
- **M. FUKUHARA** ; **T. KURODA** ; **F. HASEGAWA** ; **Y. SHIRAI** ; **T. SUWA** ; **T. HASHIDA** ; **M. NISHIJIMA**. Amorphous titanium-oxide supercapacitors with high capacitance. *EuroPhys. Lett.*, 2019, vol. 128, 58001
- **M. FUKUHARA** ; **T. KURODA** ; **F. HASEGAWA** ; **T. HASHIDA** ; **M. TAKEDA** ; **K. KONNNO** ; **N. FUJIMA**. AlO6 clusters' electric storage effect in amorphous alumina supercapacitors. *Sci. Rep*, 2021, vol. 11, 1699
- **M. FUKUHARA** ; **T. YOKOTSUKA** ; **T. HASHIDA** ; **K. YAMAGUCHI** ; **N. FUJIMA**. Amorphous alumina supercapacitors with voltage-charging performance. *EuroPhys. Lett*, 2023, vol. 141, 36003
- **M. FUKUHARA** ; **T. KURODA** ; **F. HASEGAWA** ; **T. HASHIDA** ; **M. TAKEDA** ; **N. FUJIMA** ; **M. MORITA** ; **T. NAKATANI**. Amorphous cellulose nanofiber supercapacitors. *Sci. Rep.*, 2021, vol. 11, 6436
- **M. FUKUHARA** ; **T. YOKOTSUKA** ; **T. HASHIDA** ; **T. MIWA** ; **N. FUJIMA** ; **M. MORITA** ; **T. NAKATANI** ; **F. NONOMURA**. Amorphous cellulose nanofiber supercapacitors with voltage-charging performance. *Sci. Rep.*, 2022, vol. 12, 5619